# EUROPÄISCHE PATENTSCHRIFT

(11) **EP 2 864 682 B1**
(45) Veröffentlichungstag und Bekanntmachung des Hinweises auf die Patenterteilung: **17.05.2017**
(21) Anmeldenummer: 13731088.4
(22) Anmeldetag: 18.06.2013
(51) Int. Cl.: F16L 19/065, F16J 15/02, F16L 19/07, F16L 21/03, F16L 21/08

(54) **ROHRVERBINDUNG**
PIPE COUPLING
RACCORD DE TUYAU

(30) Priorität: 21.06.2012 DE 102012105399
(43) Veröffentlichungstag der Anmeldung: 29.04.2015
(73) Patentinhaber: Düker GmbH, 97753 Karlstadt (DE)
(72) Erfinder: TEICHMANN, Timo, 63776 Schimborn (DE); SCHARF, Jürgen, 63857 Waldaschaff (DE)
(74) Vertreter: Hoeger, Stellrecht & Partner Patentanwälte mbB
(86) Internationale Anmeldenummer: PCT/EP2013/062612
(87) Internationale Veröffentlichungsnummer: WO 2013/189924

(56) Entgegenhaltungen:
- EP-A1- 0 583 707
- WO-A1-2007/029068
- AT-B- 359 783
- GB-A- 840 220
- US-A- 4 103 901
- US-A- 4 711 455
- US-A1- 2008 284 166

## Beschreibung

Die Erfindung betrifft eine Rohrverbindung umfassend eine Steckmuffe zur Aufnahme eines Spitzendes eines eingesteckten Leitungselements, ein in der Steckmuffe angeordnetes Dichtungssystem mit einem Dichtungsring zur Abdichtung des Spitzendes in der Steckmuffe und ein Schubsicherungssystem zur Fixierung des Spitzendes in der Steckmuffe.

Derartige Rohrverbindungen sind aus dem Stand der Technik bekannt, bei diesen besteht jedoch das Problem, Spitzenden unterschiedlichen Durchmessers aufnehmen zu können.

Aus der WO 2007/029068 A1 ist ferner eine Vorrichtung zur Verbindung mit einem flexiblen Schlauch bekannt, bei welcher ein rohrähnliches Element in den flexiblen Schlauch eingeführt werden kann.

Das rohrförmige Element und ein radial außenliegendes zylindrisches Gewindeelement begrenzen zusammen einen ringförmigen Sitz der zur Aufnahme eines Endes des flexiblen Schlauchs dient.

Mit dem zylindrischen Gewindeelement wird durch Drehung derselben eine geteilte Hülse, beaufschlagt, die das Ende des flexiblen Schlauchs einklemmt und dabei auch eine Dichtung beaufschlagt.

Der Erfindung liegt die Aufgabe zugrunde, eine Rohrverbindung der gattungsgemäßen Art derart zu verbessern, dass diese für Spitzenden mit variierenden Durchmessern sicher abdichten und sichern kann.

Diese Aufgabe wird bei einer Rohrverbindung mit den Merkmalen des Anspruchs 1 gelöst.

Der Vorteil der erfindungsgemäßen Lösung ist darin zu sehen, dass mit einem derart ausgebildeten Dichtungsring des Dichtsystems die Möglichkeit besteht, Spitzenden mit unterschiedlichen Durchmessern in ein und derselben Steckmuffe aufzunehmen.

Eine weitere alternative oder ergänzende erfindungsgemäße Lösung der Aufgabe sieht vor, dass der Dichtungsring des Dichtungssystems ein Außendichtungselement umfasst, welches an einer Innenfläche der Steckmuffe dichtend anlegbar ist, und ein Innendichtungselement umfasst, welches unabhängig vom Außendichtungselement aufweitbar ist, und dass das Innendichtungselement als Innendichtlippe ausgebildet ist, welche an einer Außenfläche des Spitzendes anlegbar und von dem Minimaldurchmesser auf den Maximaldurchmesser aufweitbar ist.

Der Vorteil dieser Lösung ist in einer optimalen Abdichtung des Spitzendes zu sehen.

Da eine derartige aufweitbare Innendichtlippe, die sich insbesondere in einer derartigen Richtung erstreckt, dass das abzudichtende Medium die Innendichtlippe mit ihrer Abdichtseite an der Außenfläche des Spitzendes kraftbeaufschlagt anlegt, die Gefahr in sich birgt, dass diese bei zu großer Druckbelastung "umklappt", ist vorzugsweise vorgesehen, dass die Innendichtlippe auf ihrer einer Abdichtseite gegenüberliegenden Rückseite Versteifungselemente trägt.

Derartige Versteifungselemente dienen somit in erster Linie dazu, das "Umklappen" der Dichtlippe bei zu großer Druckbeaufschlagung zu verhindern. Die Versteifungselemente können in unterschiedlichster Art und Weise ausgebildet sein, wobei diese die Aufweitbarkeit der Dichtlippe nicht behindern dürfen.

Aus diesem Grund ist vorgesehen, dass die Versteifungselemente in Umfangsrichtung der Innendichtlippe voneinander getrennt an der Innendichtlippe sitzen, so dass die Innendichtlippe zumindest in den zwischen den Versteifungselementen liegenden Zwischenbereichen elastisch ausgebildet sein kann, um die Innendichtlippe in Umfangsrichtung von dem Minimaldurchmesser auf den Maximaldurchmesser aufweiten zu können. Insbesondere ist dabei vorgesehen, dass die Innendichtlippe in Umfangsrichtung um eine Mittelachse der Steckmuffe aufeinanderfolgend eine Vielzahl, beispielsweise mindestens drei, voneinander getrennte Versteifungselemente aufweist.

Besonders vorteilhaft ist eine noch größere Zahl von Versteifungselementen, die einerseits das Umklappen der Dichtlippe verhindern, andererseits jedoch deren Aufweitbarkeit nicht behindern.

Um außerdem die Innendichtlippe im nicht druckbeaufschlagten Zustand der Rohrverbindung noch mit einer Kraft in Abdichtrichtung beaufschlagen zu können, ist vorzugsweise vorgesehen, dass das Innendichtungselement, insbesondere mindestens einige der Versteifungselemente, eine Druckseite aufweist, mit welcher dieses an eine Druckfläche eines Druckelements anlegbar ist.

Der Vorteil dieser Lösung besteht darin, dass damit die Möglichkeit besteht, die Innendichtlippe auch ohne Druckbeaufschlagung mechanischen Kräften auszusetzen, die in Richtung des Spitzendes wirken, um die Innendichtlippe kraftbeaufschlagt an der Außenfläche des Spitzendes anzulegen.

Beispielsweise ist dabei vorgesehen, dass die Druckseite als gewölbte Drucknase ausgebildet ist.

Hinsichtlich der Ausbildung der Druckfläche wurden bislang keine näheren Angaben gemacht.

So sieht eine vorteilhafte Lösung vor, dass die Druckfläche mit zunehmendem Abstand von der Mittelachse der Steckmuffe sich zunehmend in Richtung einer Einstecköffnung der Steckmuffe erstreckt.

Dabei kann die Druckfläche konisch ausgebildet sein.

Es ist aber auch denkbar, die Druckfläche als gewölbte Fläche, beispielsweise als Flächenabschnitt eines Paraboloids oder eines Toroids oder ähnlicher gewölbter Flächen, auszubilden.

Hinsichtlich der Ausbildung des Druckelements wurden bislang keine näheren Angaben gemacht.

Beispielsweise könnte das Druckelement durch die Steckmuffe selbst gebildet sein, an welche beispielsweise eine Druckfläche angeformt werden kann.

Alternativ dazu ist vorgesehen, dass das Druckelement in die Steckmuffe einsetzbar ist, beispielsweise ein in die Steckmuffe einsetzbarer Ring ist.

In diesem Fall ist beispielsweise vorgesehen, dass das Druckelement an einer Stützfläche der Steckmuffe gegen eine axiale Bewegung abgestützt ist.

Die Stützfläche kann dabei eine schräg zur Mittelachse der Steckmuffe verlaufende Fläche sein.

Besonders günstig ist es, wenn die Stützfläche quer zu einer Innenwandfläche der Steckmuffe verläuft.

Insbesondere ist vorgesehen, dass die Stützfläche auch quer zur Mittelachse der Steckmuffe, vorzugsweise senkrecht zur Mittelachse der Steckmuffe verläuft.

Hinsichtlich einer möglichst optimalen Abdichtung des Innendichtungselements an dem Spitzende ist vorzugsweise vorgesehen, dass das Dichtungssystem durch eine parallel zur Mittelachse der Steckmuffe wirkende Axialkraft beaufschlagbar ist, um die Innendichtlippe des Innendichtungselements kraftbeaufschlagt an der Außenfläche des Spitzendes anzulegen.

Insbesondere ist dabei das Innendichtungselement durch die Druckfläche des Druckelements beaufschlagbar.

Vorzugsweise ist zur Beaufschlagung der Innendichtlippe des Innendichtungselements vorgesehen, dass die Versteifungselemente an der Druckfläche des Druckelements anliegen und durch eine Relativbewegung zwischen dem Dichtungsring und dem Druckelement mit einer radial zur Mittelachse der Steckmuffe gerichteten Kraft auf die Dichtlippe wirken.

Hinsichtlich der Art der Erzeugung der Axialkraft wurden bislang keine näheren Angaben gemacht.

Die Axialkraft kann dadurch entstehen, dass in dem Kanal vom ersten Leitungselement zum zweiten Leitungselement ein Unterdruck gegenüber der Umgebung der Rohrverbindung auftritt.

In diesem Fall wird der Dichtungsring durch den Unterdruck in Richtung des Druckelements verschoben, so dass die Druckfläche des Druckelements wirksam wird und die Innendichtlippe gegen die Außenfläche des Spitzendes drückt, so dass die Innendichtlippe nicht von der Außenfläche abheben kann und deren Dichtwirkung entfällt.

Es ist aber auch möglich, dass die Axialkraft durch einen Axialdruckkörper erzeugt ist, welcher über eine Stelleinrichtung relativ zur Steckmuffe verstellbar positionierbar ist.

Beispielsweise könnte die Stelleinrichtung unterschiedlichst ausgebildet sein.

Eine Möglichkeit einer Stelleinrichtung sieht vor, dass diese ein Gewindeelement zur verstellbaren Positionierung des Axialdruckkörpers relativ zur Steckmuffe umfasst.

Ein derartiges Gewindeelement könnten beispielsweise eine oder mehrere Spannschrauben sein, die auf den Axialdruckkörper wirken.

Eine andere vorteilhafte Lösung sieht vor, dass der Axialdruckkörper durch ein in ein Innengewinde der Steckmuffe einschraubbares Außengewinde verstellbar ist, wobei der Axialdruckkörper beispielsweise das Außengewinde aufweist.

Insbesondere ist dabei vorgesehen, dass der Axialdruckkörper durch Verdrehen in die Steckmuffe einschraubbar oder aus dieser ausschraubbar ist.

Hinsichtlich der Ausbildung des Dichtungsrings wurden bislang keine näheren Angaben gemacht.

So sieht eine bevorzugte Lösung vor, dass der Dichtungsring ein Stabilisierungselement umfasst, an welchem das Außendichtungselement und das Innendichtungselement abgestützt sind.

Dabei können das Außendichtungselement und das Innendichtungselement lediglich zur Abstützung an dem Stabilisierungselement anliegen.

Eine besonders vorteilhafte Lösung sieht jedoch vor, dass das Außendichtungselement und das Innendichtungselement an das Stabilisierungselement angeformt, beispielsweise angespritzt sind.

Vorzugsweise ist dabei das Stabilisierungselement als Kunststoffelement, vorzugsweise als Kunststoffring, ausgebildet, an welchen das Außendichtungselement und das Innendichtungselement angespritzt sind.

Zur Verbindung des Stabilisierungselements mit dem Außendichtungselement und dem Innendichtungselement ist vorzugsweise vorgesehen, dass das Stabilisierungselement eine Vertiefung aufweist, in welche ein das Außendichtungselement mit dem Innendichtungselement verbindender Mittelsteg eingreift.

Hinsichtlich der Ausbildung des Außendichtungselements wurden bislang keine näheren Angaben gemacht.

So sieht eine vorteilhafte Lösung vor, dass das Außendichtungselement als Lippendichtung ausgebildet ist.

Eine besonders günstige Lösung sieht vor, dass das Außendichtungselement zwei sich in entgegengesetzte Richtungen erstreckende Außendichtlippen aufweist, von denen jede durch einen an dieser anstehenden Druck beaufschlagbar und dadurch an der Innenwandfläche der Steckmuffe kraftbeaufschlagt anlegbar ist.

Eine derartige Dichtung hat den Vorteil, dass diese mit der dem ersten Leitungselement zugewandten Außendichtlippe abdichtet, wenn in dem Kanal vom ersten Leitungselement zum zweiten Leitungselement ein Überdruck gegenüber der Umgebung der Rohrverbindung vorliegt, und mit der anderen, der Einstecköffnung zugewandten Außendichtlippe dann abdichtet, wenn in dem Kanal ein Unterdruck gegenüber der Umgebung der Rohrverbindung vorliegt.

Hinsichtlich der Ausbildung des Schubsicherungssystems wurden bislang keinerlei Angaben gemacht.

So könnte beispielsweise das Schubsicherungssystem zusätzlich zur Steckmuffe und außerhalb derselben angeordnet sein.

Alternativ oder ergänzend zu den bislang beschriebenen Lösungen sieht eine besonders günstige Lösung der Aufgabe vor, dass das Schubsicherungssystem in der Steckmuffe angeordnet ist.

Eine besonders zweckmäßige Lösung sieht dabei vor, dass das Schubsicherungssystem Schubsicherungselemente umfasst, die radial zur Mittelachse der Steckmuffe in Richtung auf das Spitzende bewegbar sind und kraftbeaufschlagt an dem Spitzende anlegbar sind.

Insbesondere ist das Schubsicherungssystem so ausgebildet, dass die Schubsicherungselemente sowohl an das Spitzende mit dem Maximaldurchmesser als auch an das Spitzende mit dem Minimaldurchmesser anlegbar sind.

Insbesondere ist vorgesehen, dass die Schubsicherungselemente an einem Träger angeordnet sind.

Beispielsweise ist dabei vorgesehen, dass die Schubsicherungselemente an dem Träger relativ zu diesem in radialer Richtung zur Mittelachse der Steckmuffe bewegbar gehalten sind.

Bei einer besonders zweckmäßigen Lösung sind die Schubsicherungselemente fest mit dem Träger verbunden und die radiale Bewegbarkeit erfolgt durch eine Deformation des Trägers, die insbesondere dann möglich ist, wenn der Träger kein geschlossener Ring sondern ein durch einen umfangsseitigen Freiraum offen ist, so dass der Träger radial verformbar ist.

Die Fixierung der Schubsicherungselemente an dem Träger erfolgt beispielsweise durch eine Rastverbindung, so dass beispielsweise unterschiedliche Schubsicherungselemente in den Träger einsetzbar sind.

Um eine Schubsicherung für unterschiedliche Spitzenden, insbesondere unterschiedliche Außenflächen von Spitzenden realisieren zu können, ist vorgesehen, Schubsicherungselemente für unterschiedliche Außenflächen gleichzeitig in den Träger einzusetzen, um mit demselben Schubsicherungssystem Spitzenden mit unterschiedlichen Außenflächen mit der geforderten Sicherheit festlegen zu können.

Zur Beaufschlagung der Schubsicherungselemente ist vorzugsweise vorgesehen, dass die Schubsicherungselemente durch in einem spitzen Winkel zur Mittelachse der Steckmuffe verlaufende Keilflächen in Richtung der Mittelachse der Steckmuffe beaufschlagbar sind.

Dabei müssen die Keilflächen nicht zwingenderweise konisch zur Mittelachse verlaufende Flächen sein, sondern können von konischen Flächen abweichende gewölbte Flächen, wie beispielsweise parabolische Flächen oder torische Flächen sein.

Die Keilflächen können dabei grundsätzlich an beliebigen Elementen angeordnet sein.

Besonders vorteilhaft ist es, wenn die Keilflächen an einem Keilring des Schubsicherungssystems angeordnet sind, welcher insbesondere relativ zu den Schubsicherungselementen bewegbar ist.

Somit lassen sich die Schubsicherungselemente insbesondere dann vorteilhafterweise radial zur Mittelachse bewegen, wenn die Schubsicherungselemente und die Keilfläche in Axialrichtung parallel zur Mittelachse der Steckmuffe relativ zueinander bewegbar und durch eine in dieser Richtung wirkende Axialkraft beaufschlagbar sind.

Hinsichtlich der Erzeugung der Axialkraft wurden bislang ebenfalls keine näheren Angaben gemacht.

So ist ebenfalls vorteilhafterweise vorgesehen, dass das Schubsicherungssystem durch einen Axialdruckkörper beaufschlagt ist.

Dabei könnte grundsätzlich ein vom Axialdruckkörper für das Dichtungssystem separater Axialdruckkörper für die Beaufschlagung des Schubsicherungssystems vorgesehen sein.

Besonders günstig ist es jedoch, wenn der zur Beaufschlagung des Dichtungssystems vorgesehene Axialdruckkörper auch das Schubsicherungssystem beaufschlagt, so dass das Dichtungssystem einerseits und der Axialdruckkörper andererseits auf das Schubsicherungssystem einwirken.

Damit besteht einerseits die Möglichkeit, den Axialdruckkörper derart zu positionieren, dass dieser das Schubsicherungssystem und das Dichtungssystem derart in die Steckmuffe drückt, dass diese zwischen einer Abschlusswand der Steckmuffe und dem Axialdruckkörper eingespannt und somit beide durch Axialkräfte beaufschlagt sind.

Es besteht aber auch die Möglichkeit, dass der Axialdruckkörper als Anschlag dient und das Dichtungssystem durch das in dem Kanal unter Überdruck stehende Medium im ersten Leitungselement in der Art eines Kolbens in Richtung des Axialdruckkörpers beaufschlagt wird und somit das Schubsicherungssystem beaufschlagt, um die Schubsicherung des Spitzendes zu verstärken, wobei das Schubsicherungssystem durch den Axialdruckkörper abgestützt ist.

Grundsätzlich könnten das Dichtungssystem und das Schubsicherungssystem durch zusätzliche Elemente voneinander getrennt sein.

Eine besonders zweckmäßige Lösung sieht jedoch vor, dass das Dichtungssystem und das Schubsicherungssystem und der Axialdruckkörper aneinander anliegen.

Vorzugsweise wird dabei das Schubsicherungssystem durch den Axialdruckkörper beaufschlagt und das Schubsicherungssystem beaufschlagt seinerseits das Dichtungssystem mit der auf dieses wirkenden Axialkraft.

Um die Montage der Rohrverbindung zu erleichtern, ist vorzugsweise vorgesehen, dass der Dichtungsring und die Schubsicherungselemente zur Montage der Rohrverbindung miteinander gekoppelt sind.

Insbesondere ist hierbei vorgesehen, dass der Versteifungsring des Dichtungsrings und ein Träger der Schubsicherungselemente zur Montage der Rohrverbindung miteinander gekoppelt sind.

Hierzu ist es insbesondere günstig, wenn der Träger und der Stabilisierungsring relativ zueinander drehbar, jedoch zur Ausführung von Bewegungen in Richtung parallel zur Mittelachse miteinander gekoppelt sind.

Ferner ist zur Verbesserung der Montage vorzugsweise vorgesehen, dass der Keilring des Schubsicherungssystems und der Axialdruckkörper relativ zueinander verdrehbar, jedoch zur Ausführung von Bewegungen in Richtung parallel zur Mittelachse miteinander gekoppelt sind.

Eine besonders günstige Lösung sieht vor, dass der Axialdruckkörper, das Schubsicherungssystem und der Dichtungsring zur Ausführung von Bewegungen in Richtung parallel zur Mittelachse miteinander gekoppelt sind, wobei der Keilring und die Schubsicherungselemente in axialer Richtung soweit relativ zueinander bewegbar sind, dass die Schubsicherungselemente ohne Beaufschlagung durch den Keilring über den Maximaldurchmesser hinaus bewegbar sind.

Weitere Merkmale und Vorteil der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine perspektivische Darstellung einer erfindungsgemäßen Rohrverbindung;
- Fig. 2: eine halbseitig geschnittene perspektivische Darstellung eines ersten Ausführungsbeispiels der erfindungsgemäßen Rohrverbindung;
- Fig. 3: eine in Richtung einer Mittelachse der Rohrverbindung auseinandergezogene Darstellung der einzelnen Elemente des ersten Ausführungsbeispiels der erfindungsgemäßen Rohrverbindung;
- Fig. 4: einen vergrößerten Schnitt durch einen Bereich A in Fig. 3;
- Fig. 5: einen Schnitt längs Linie 5-5 in Fig. 4;
- Fig. 6: eine vergrößerte Darstellung eines Bereichs B in Fig. 3;
- Fig. 7: eine perspektivische Darstellung ähnlich Fig. 2 eines erfindungsgemäßen Rohrverbindung und
- Fig. 8: eine Darstellung ähnlich Fig. 3 des zweiten Ausführungsbeispiels der erfindungsgemäßen Rohrverbindung.

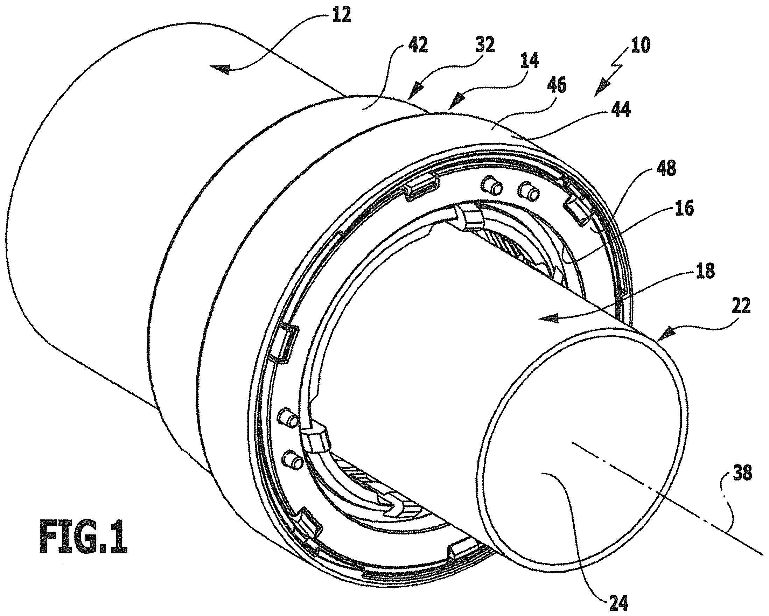

Ein in Fig. 1 dargestelltes Ausführungsbeispiel einer erfindungsgemäßen Rohrverbindung 10 umfasst ein erstes Leitungselement 12, welches beispielsweise ein Rohr, ein Formstück oder auch eine Armatur sein kann.

Dieses erste Leitungselement 12 ist mit einer als Ganzes mit 14 bezeichneten Steckmuffe versehen, wobei die Steckmuffe 14 mit dem ersten Leitungselement 12 verbunden, vorzugsweise einstückig an das erste Leitungselement 12 angeformt ist.

Die Steckmuffe 14 weist auf ihrer dem ersten Leitungselement 12 abgewandten Seite eine Einstecköffnung 16 auf, durch welche ein Spitzende 18 eines als Ganzes mit 22 bezeichneten zweiten Leitungselements in die Steckmuffe 14 einsteckbar und mit dieser Steckmuffe 14 verbindbar ist.

Dabei kann das zweite Leitungselement 22 ebenfalls ein Rohr, ein Formstück oder eine Armatur sein.

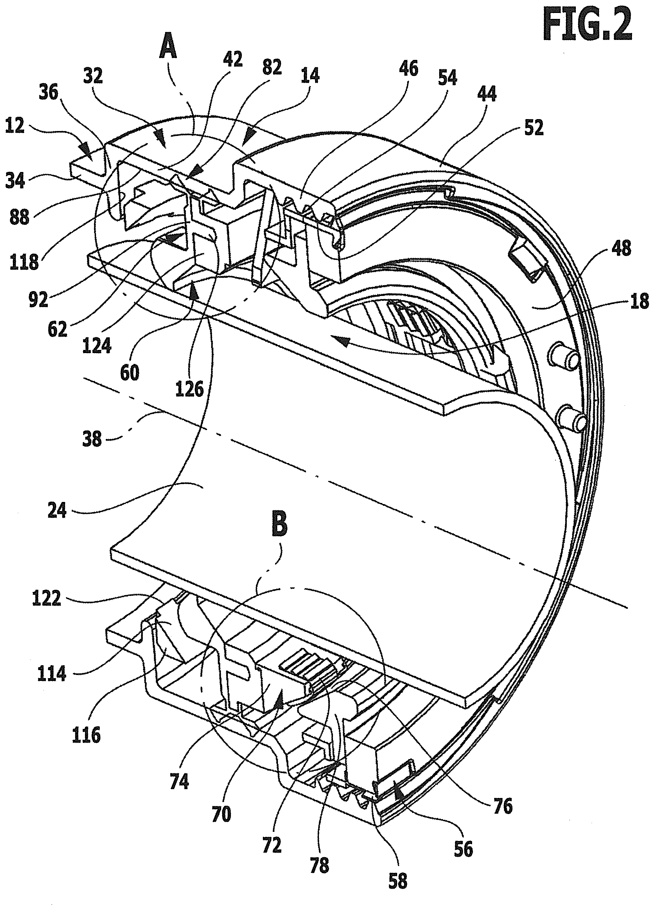

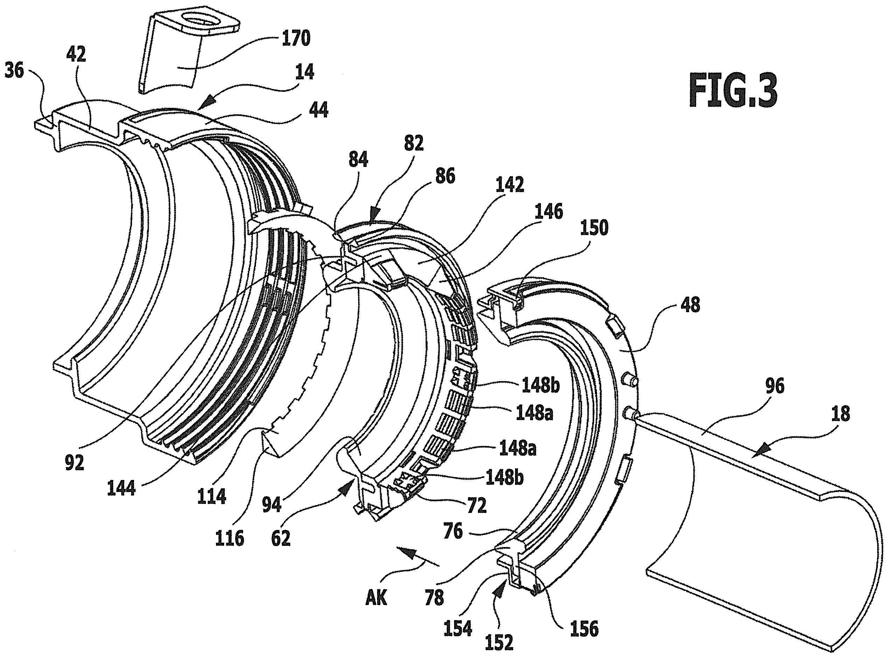

Wie in Fig. 2 und 3 im Zusammenhang mit einem ersten Ausführungsbeispiel einer erfindungsgemäßen Rohrverbindung 10 dargestellt, umfasst die Steckmuffe 14 einen Steckmuffenmantel 32, welcher an einen Endbereich 34 des ersten Leitungselements 12 angeformt ist und im Anschluss an den Endbereich 34 eine Abschlusswand 36 aufweist, die sich radial zu einer Mittelachse 38 der Steckmuffe 14 nach außen erstreckt und dann in eine sich ungefähr parallel zur Mittelachse 38 erstreckende Außenwand 42 des Steckmuffenmantels 32 übergeht, der sich von der Abschlusswand 36 bis zu einem einsteckseitigen Endabschnitt 44 erstreckt, wobei der einsteckseitige Endabschnitt 44 beispielsweise gegenüber der Außenwand 42 einen radial erweiterten Randbereich 46 aufweist, an welchem ein Haltering 48 fixierbar ist.

Im dargestellten Ausführungsbeispiel ist der Wandbereich 46 mit einem Innengewinde 52 versehen, in welches ein Außengewinde 54 des Halterings 48 einschraubbar ist, wobei eine Verdrehsicherung 56 durch ein sich zwischen dem Innengewinde 52 und dem Außengewinde 54 beim Herausdrehen verklemmendes Klemmelement 58 realisiert ist.

In der Steckmuffe 14 ist sowohl ein Dichtungssystem 60 mit einem Dichtungsring 62 als auch ein Schubsicherungssystem 70 mit Schubsicherungselementen 72 einsetzbar. Das Dichtungssystem 60 dient zur Abdichtung eines in der Rohrverbindung vom ersten Leitungselement 12 zum zweiten Leitungselement 22 verlaufenden Kanals 24 für das zu führende Medium. Die Schubsicherungselemente 72 sind beispielsweise durch Verrasten mit einem Träger 74 an diesem gehalten und durch Verformung des Trägers 74 radial zur Mittelachse 38 bewegbar, um das Spitzende 18 gegen ein Herauswandern aus der Steckmuffe 14 zu sichern. Ferner ist jedes der Schubsicherungselemente 72 jeweils durch eine Keilfläche 76 in Richtung der Mittelachse 38 beaufschlagbar. Die Keilfläche 76 ist beispielsweise an einem Keilring 78 angeordnet und die Keilfläche 76 ist vorzugsweise als eine konisch zur Mittelachse 38 verlaufende Fläche ausgebildet.

Wie insbesondere in Fig. 2 und 3 dargestellt, umfasst der Dichtring 62 ein Außendichtungselement 82, welches zwei sich in entgegengesetzte Richtungen erstreckende Außendichtlippen 84 und 86 aufweist, die an einer Innenwandfläche 88 der Außenwand 42 der Steckmuffe 14 anlegbar sind, wobei sich die Außendichtlippe 84 ausgehend von einem Mittelsteg 92 des Dichtrings 62 in Richtung der Abschlusswand 36 erstreckt, während sich die Außendichtlippe 86 ausgehend von dem Mittelsteg 92 in Richtung des einsteckseitigen Endabschnitts 44 oder der Einstecköffnung 16 erstreckt. Das Außendichtungselement 82 liegt bei einer Druckbeaufschlagung durch ein in dem Kanal 24 unter Überdruck gegenüber der Umgebung der Rohrverbindung 10 vorliegenden Medium durch die Außendichtlippe 84 druckbeaufschlagt an der Innenwandfläche 88 abdichtend an und liegt bei einer Druckbeaufschlagung durch ein in dem Kanal 24 unter Unterdruck gegenüber der Umgebung stehendes Medium mit der Außendichtlippe 86 druckbeaufschlagt an der Innenwandfläche 88 abdichtend an, da ein um das Spitzende 18 herum in die Steckmuffe 14 eintretendes druckbeaufschlagtes Medium auf die Außendichtlippe 86 wirkt.

Außerdem umfasst der Dichtungsring 62 ein an den Mittelsteg 92 auf einer der Mittelachse 38 zugewandten Seite angeformtes Innendichtungselement 94, welches an eine Außenfläche 96 des Spitzendes 18 anlegbar ist, wenn diese einen Minimaldurchmesser D1 aufweist und aber auch an eine Außenfläche 96' anlegbar ist, wenn diese einen Maximaldurchmesser D2 aufweist, wobei dies durch Aufweiten des Innendichtungselements 94 von dem Minimaldurchmesser D1 bis zum Maximaldurchmesser D2 möglich ist.

Hierzu ist das Innendichtungselement 94 mit einer elastisch aufweitbaren Innendichtlippe 98 versehen, die sich ausgehend von dem Mittelsteg 92 in Richtung des ersten Leitungselements 12 erstreckt, so dass bei Druckbeaufschlagung mit einem vom ersten Leitungselement 12 her kommenden Medium die Innendichtlippe 98 mit ihrer Abdichtseite 102 druckbeaufschlagt an der Außenfläche 96 dichtend anliegt.

Die Innendichtlippe 98 ist eine um die Mittelachse 38 geschlossen umlaufende elastische Dichtlippe, die, um die Aufweitung vom Minimaldurchmesser D1 zum mindestens 15 mm größeren Maximaldurchmesser D2 realisieren zu können, ausgehend vom Mittelsteg 92 eine Dichtlippenlänge DL aufweist, die mindestens der Differenz zwischen dem Minimaldurchmesser D1 und dem Maximaldurchmesser D2, vorzugsweise mindestens dem 1,1-fachen dieser Differenz, entspricht.

Aufgrund dieser Dichtlippenlänge DL besteht die Gefahr, dass die Innendichtlippe 98 bei einer zu starken Druckbeaufschlagung umklappt und sich in Richtung des einsteckseitigen Endabschnittes 44 erstreckt und somit nicht mehr mit ihrer Abdichtseite 102 an der Außenfläche 96 anliegt, sondern mit ihrer Rückseite 104 anliegen würde, so dass keine Abdichtung an der Außenfläche 96 mehr erfolgen würde.

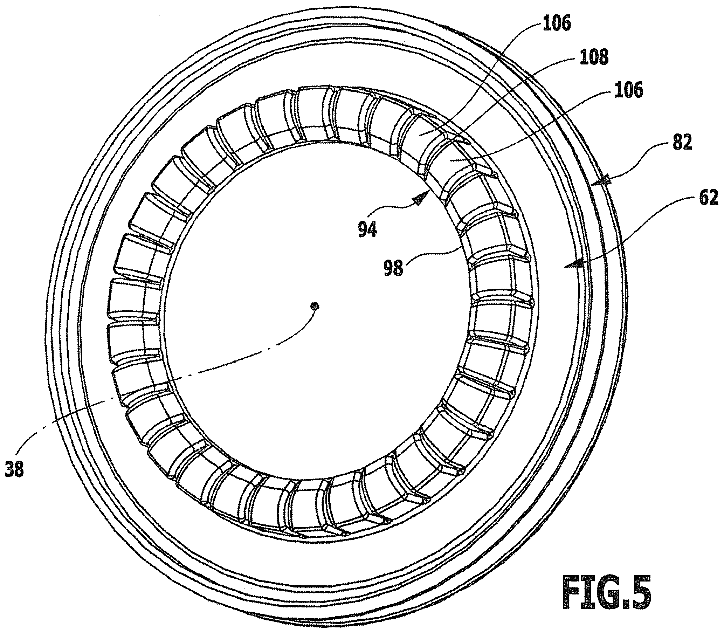

Aus diesem Grund trägt die Innendichtlippe 98 auf ihrer der Abdichtseite 102 gegenüberliegenden Rückseite 104 Versteifungselemente 106, die in Richtung der Dichtlippenlänge DL die Innendichtlippe 98 versteifen, jedoch ein Aufweiten der Innendichtlippe 98 dadurch ermöglichen, dass die Versteifungselemente 106 in Umlaufrichtung um die Mittelachse 38 voneinander getrennte Elemente sind, so dass die Innendichtlippe 98, wie in Fig. 5 dargestellt, zumindest mit den sich zwischen den Versteifungselementen 106 erstreckenden Zwischenbereichen 108 sich elastisch dehnen und damit von dem Minimaldurchmesser D1 auf den Maximaldurchmesser D2 aufweiten lässt.

Ferner weisen die Versteifungselemente 106 eine der Innendichtlippe 98 abgewandte beispielsweise gewölbt ausgeführte Druckseite 112 auf, an welcher die Versteifungselemente 106 durch eine Druckfläche 114 eines Druckelements 116 beaufschlagbar ist. Das Druckelement 116 ist beispielsweise als Druckring ausgebildet, welcher eine konisch zur Mittelachse 38 verlaufende Druckfläche 114 aufweist, wobei die Druckfläche 114 sich mit zunehmendem Abstand von der Mittelachse 38 in Richtung von der Abschlusswand 36 weg erstreckt.

Beispielsweise ist das Druckelement 116 ein separater Druckring, der in die Steckmuffe 14 so einsetzbar ist, dass dieser auf einer durch die Abschlusswand 36 gebildeten Stützfläche 118, die beispielsweise in einer zur Mittelachse 38 senkrechten Ebene verläuft, anlegbar ist.

Alternativ dazu bestünde aber auch die Möglichkeit, anstelle des Druckelements 116 die Druckfläche 114 unmittelbar durch eine geeignete Formgebung der Abschlusswand 36 zu realisieren, so dass ein zusätzliches Druckelement 116 nicht erforderlich ist.

Das Druckelement 116 könnte einerseits vollflächig auf der Stützfläche 118 aufliegen, vorzugsweise ist jedoch das Druckelement 116 mit Fußelementen 122 versehen, die in Umlaufrichtung um die Mittelachse 38 voneinander getrennt sind und auf der Stützfläche 118 aufliegen.

Um dem Dichtungsring 62 die notwendige Steifigkeit zu verleihen, ist der Mittelsteg 92 mit einem Stabilisierungselement 124 verbunden, welcher sich von dem Außendichtungselement 82 bis zum Innendichtungselement 94 erstreckt und somit für das Außendichtungselement 82 die erforderliche radiale Abstützung zur Verfügung stellt, um die Außendichtlippen 84 und 86 mit der für ein zuverlässiges Anliegen an der Innenwandfläche 88 erforderlichen Abstützkraft zu versehen.

Außerdem bietet das Stabilisierungselement 124 die notwendige Basis für die Deformation des Innendichtungselements 94 unabhängig vom Außendichtungselement 82 zur Anpassung desselben an die Spitzenden 18 mit verschiedenen Durchmessern, die zwischen dem Minimaldurchmesser D1 und dem Maximaldurchmesser D2 liegen können, so dass die Aufweitung des Innendichtungselements 94 unabhängig ist von der sicheren Anlage des Außendichtungselements 82 mit den Außendichtlippen 84 und 86 an der Innenwandfläche 88.

Vorzugsweise ist das Stabilisierungselement 124 ein in sich steifer Kunststoffring, welcher mit dem Mittelsteg 92 über einen Haltesteg 126 verbunden ist, der in das Stabilisierungselement 124 eindringt.

Beispielsweise wird der erfindungsgemäße Dichtungsring 62 dadurch hergestellt, dass ausgehend von dem Stabilisierungselement 124 an dieses der Mittelsteg 92 mit dem Außendichtungselement 82 und dem Innendichtungselement 94 angespritzt wird.

Dadurch, dass das Außendichtungselement 82 mit den beiden Außendichtungslippen 84 und 86 an der zylindrisch zur Mittelachse 38 verlaufenden Innenwandfläche 88 des Steckmuffenmantels 32 anliegt, ist der gesamte Dichtungsring 62 in Richtung der Mittelachse 38 in dem Steckmuffenmantel 32 verschiebbar, und zwar vorzugsweise durch Beaufschlagung des Stabilisierungselements 124 in Richtung der Abschlusswand 36, so dass dadurch die Versteifungselemente 106 mit ihren gewölbten Druckseiten 112 an der Druckfläche 114 des Druckelements 116 zur Anlage kommen und die Druckfläche 114 eine zusätzliche Beaufschlagung der Versteifungselemente 106 in Richtung der Außenfläche 96 des Spitzendes 18 bewirkt, um das Innendichtungselement 94, insbesondere die Innendichtlippe 98 desselben kraftbeaufschlagt an der Außenfläche 96 des Spitzendes 18 anzulegen.

Eine derartige Kraftwirkung auf das Stabilisierungselement 124 lässt sich beispielsweise durch den als Axialdruckkörper wirkenden Haltering 48 ausüben, der beispielsweise durch sein in das Innengewinde 52 einschraubbares Außengewinde 54 in Richtung der Abschlusswand 36 verschiebbar ist.

Theoretisch könnte der Haltering 48 unmittelbar auf das Stabilisierungselement 124 des Dichtungsrings 62 einwirken.

Vorzugsweise ist jedoch die erfindungsgemäße Rohrverbindung nicht nur mit dem Dichtungssystem 60 versehen, sondern dem Schubsicherungssystem 70.

Das Schubsicherungssystem 70 liegt mit dem Träger 74 für die Schubsicherungselemente 72 an dem Stabilisierungselement 124 an, wobei der Träger 74 vorzugsweise aus einem hinsichtlich der Steifigkeit mit dem Stabilisierungselement 124 vergleichbaren Material, beispielsweise aus dem identischen Material hergestellt ist.

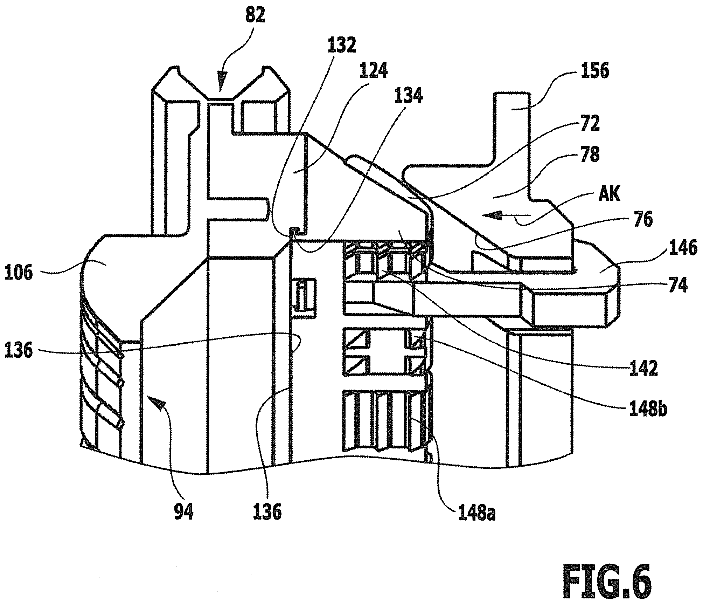

Um die Montage zu erleichtern, ist vorzugsweise, wie in Fig. 6 dargestellt, der Träger 74 mit dem Stabilisierungselement 124 verbunden, beispielsweise dadurch, dass der Träger 74 auf seiner dem Stabilisierungselement 124 zugewandten Seite radial zur Mittelachse 38 nach außen überstehende Haltenasen 132 aufweist, die in eine entsprechende Nut 134 in dem Stabilisierungselement 124 eingreifen, wobei gleichzeitig der Träger 74 mit einer axialen Anlagefläche 136 an einer axialen Abstützfläche 138 des Stabilisierungselement 124 anliegt, um eine parallel zur Mittelachse 38 wirkende axiale Kraftwirkung AK von dem Träger 74 auf das Stabilisierungselement 124 des Dichtrings 62 oder umgekehrt zu übertragen.

Ferner sind die an dem Träger 74 gehaltenen Schubsicherungselemente 72 radial zur Mittelachse 38 dadurch bewegbar, dass der Träger 74 nicht ein geschlossener Ring, sondern C-förmig ausgebildet ist und durch Variation eines Freiraums 142 zwischen den Enden 144 und 146 seinen Durchmesser verändern kann, so dass die Schubsicherungselemente 72 durch den Keilring 78 mit der Keilfläche 76 in Richtung der Außenfläche 98 des Spitzendes 18 so bewegbar sind, dass die Schubsicherungselemente 72 sowohl an einem Spitzende 18 mit einer Außenfläche 96 mit dem Minimaldurchmesser D1 als auch an einem Spitzende 18' mit einem Maximaldurchmesser der Außenfläche 96' schubsichernd angreifen und insbesondere mit ihren Krallen 148 eine Schubsicherung des Spitzendes 18 relativ zur Steckmuffe 14 bewirken.

Bei einer vorteilhaften Lösung sind in dem Träger 74 Schubsicherungselemente 72 mit verschiedenen Krallen 148a und 148b angeordnet, die für unterschiedliche Arten von Außenflächen 96 der Spitzenden 18 optimal geeignet sind.

Beispielsweise ist eine Art von Krallen 148a für die Außenflächen von Spitzenden 18 aus Guss und eine Art von Krallen 148b für die Außenflächen von Spitzenden aus Kunststoff 18 optimal geeignet.

Zur Erleichterung der Montage ist ferner, wie in Fig. 3 dargestellt, der Keilring 78 mit dem Haltering 48 so verbunden, dass der Keilring 78 relativ zum Haltering 48 verdrehbar ist, jedoch gegen eine Bewegung in relativ zum Haltering 48 in axialer Richtung parallel zur Mittelachse 38 gesichert ist. Hierzu ist an dem Haltering 48 eine an diesem mit einem Rastelement 150 fixierte Keilringführung 152 vorgesehen, welche einen im Abstand vom Haltering 48 auf einer der Abschlusswand 36 zugewandten Seite verlaufenden Führungsflansch 154 aufweist, der so angeordnet ist, dass zwischen den Führungsflansch 154 und den Haltering 48 ein radialer Vorsprung 156 des Keilrings 78 eingreifen kann, so dass insgesamt der Keilring 78 durch den Führungsflansch 154 und den Haltering 48 unverlierbar in axialer Richtung relativ zum Haltering 48 geführt ist.

Ferner erlauben die Vorsprünge 156, die Zwischen den Führungsflansch 154 und den Haltering 48 eingreifen, eine Verdrehung des Halterings 48 relativ zum Keilring 78 und außerdem noch eine begrenzte Verschiebung des Keilrings 78 quer zur Mittelachse 38, so dass sich der Keilring 78 der Lage des Trägers 74 mit den Schubsicherungselementen 72 in der Steckmuffe 14 anpassen kann, wenn eine Beaufschlagung der Schubsicherungselemente 72 durch die Keilfläche 76 des Keilrings 78 erfolgt.

Ein Einschrauben des Halterings 48 mit dem in das Innengewinde 52 der Steckmuffe 14 eingreifenden Außengewinde 54 führt somit zu einer Bewegung des Keilrings 78 in Richtung der Abschlusswand 36 und somit zu einer Beaufschlagung der Schubsicherungselemente 72 durch die Keilfläche 76 mit der durch das Verdrehen des Halterings 48 erzeugten axialen Kraft AK.

Dabei wird die axiale Kraft AK von den Schubsicherungselementen 72 auf den Träger 74 übertragen, der seinerseits an dem Stabilisierungselement 124 anliegt, so dass die axiale Kraft AK auch auf den Dichtungsring 62 wirkt und somit den gesamten Dichtungsring 62 in Richtung des Druckelements 116 verschiebt, so dass dessen Druckfläche 114 auf die Druckseite 112 der Versteifungselemente 106 wirkt, um die Innendichtlippe 98 je nach Axialkraft AK mehr oder weniger stark kraftbeaufschlagt an der Außenfläche 96 des Spitzendes anzulegen, um unabhängig von dem Druck in die Rohrverbindung durchströmenden Medium einen ausreichenden Sitz der Innendichtlippe 98 an der Außenfläche 96 zu gewährleisten.

Zusätzlich hat die erfindungsgemäße Lösung den Vorteil, dass bei Einwirkung eines im ersten Leitungselement 12 angeordneten und unter Druck stehenden Medium auf den Dichtungsring 62 dieser mit dem Stabilisierungselement 124 auf den Träger 74 wirkt und diesen mitsamt den Schubsicherungselementen 72 in axialer Richtung auf den Keilring 78 zu beaufschlagt, so dass die dadurch ebenfalls verschobenen Schubsicherungselemente 72 gegen die Keilfläche 76 des Keilrings 78 verstärkt gedrückt werden und dabei mit einer verstärkten Kraft in radialer Richtung zur Außenfläche 96 gedrückt werden und damit die Wirkung des Schubsicherungssystems verstärkt wird.

Damit ist das Spitzende 18 in der Steckmuffe 14 einerseits durch das Schubsicherungssystem 70 fixierbar und andererseits durch das Dichtungssystem 60 abdichtbar.

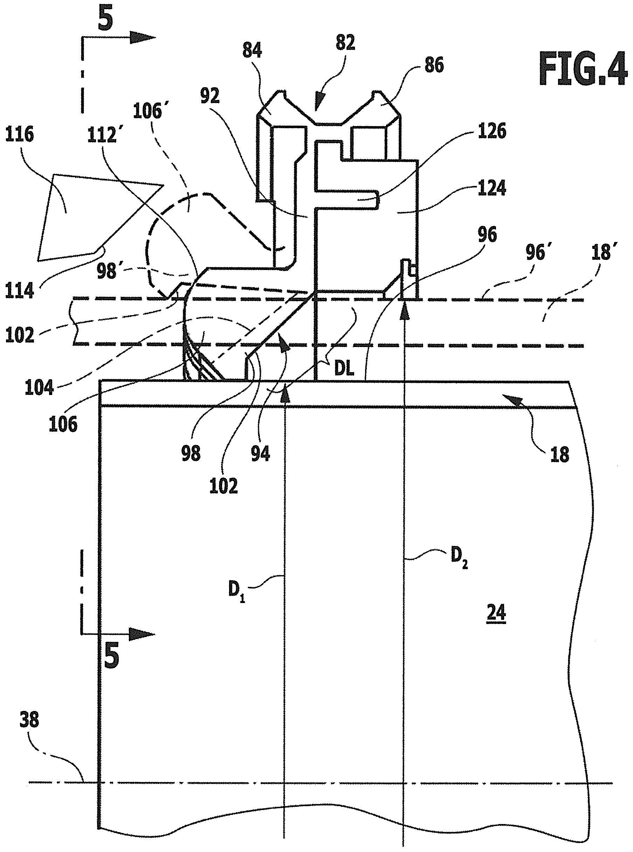

Bei dem in den Fig. 1 und Fig. 2 bis 6 dargestellten ersten Ausführungsbeispiel der erfindungsgemäßen Rohrverbindung erfolgt eine Montage beispielsweise dergestalt, dass der Haltering 48 mit dem an diesem durch die Keilringführung 152 gehaltenen Keilring 78, der Dichtungsring 62 mit dem Träger 74 und den Schubsicherungselementen 72 sowie das Druckelement 116 mit den Druckflächen 114 auf die Außenfläche 96 des Spitzendes 18 aufgeschoben und dann das Spitzende 18 mitsamt diesen Elementen in den einsteckseitigen Endabschnitt 44 und dann in den Steckmuffenmantel 32 der Steckmuffe 14 eingeschoben werden, so dass der Dichtungsring 62 mit dem Außendichtelement 82 an der Innenwandfläche 88 des Steckmuffenmantels 32 zur Anlage kommt und schließlich sich auch das Druckelement 116 auf der Stützfläche 118 in der Steckmuffe 14 abstützt.

Das Einschrauben des Halterings 48 mit dem Außengewinde 54 in das Innengewinde 52 bewirkt die parallel zur Mittelachse 38 gerichtete axiale Kraft, mit der zunächst - wie bereits im Detail erwähnt - der Keilring 78 auf die Schubsicherungselemente 72 und diese dann über den Träger 74 auf den Dichtungsring 62 wirken und somit letztlich sowohl eine schubgesicherte Fixierung des Spitzendes 18 als auch eine Abdichtung des Spitzendes 18 in der Steckmuffe 14 bewirken.

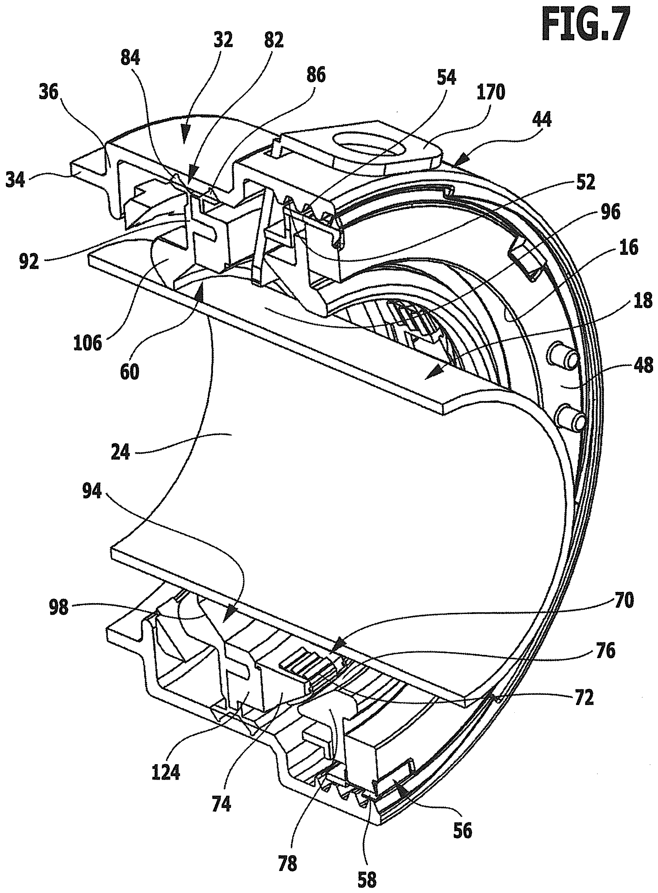

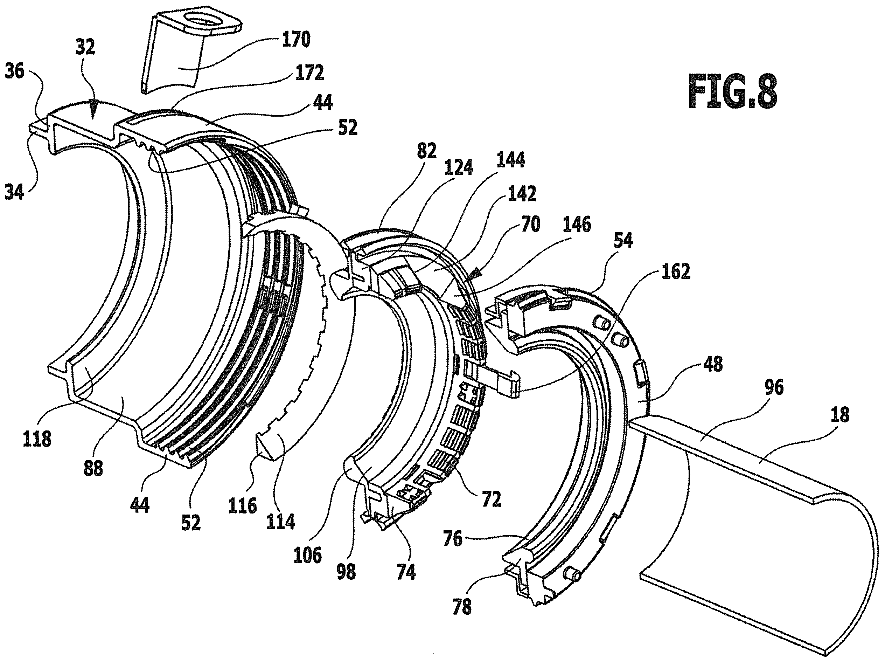

Bei einem zweiten Ausführungsbeispiel der erfindungsgemäßen Rohrverbindung, dargestellt in Fig. 7 und Fig. 8 sind all diejenigen Elemente, die mit denen des voranstehenden Ausführungsbeispiels identisch sind, mit denselben Bezugszeichen versehen, so dass vollinhaltlich auf die Ausführungen zu diesen Bezug genommen werden kann.

Im Gegensatz zum ersten Ausführungsbeispiel ist bei dem zweiten Ausführungsbeispiel der Träger 74 durch Rasthaken 162 ebenfalls an dem Haltering 48 mit axialer Bewegungsfreiheit gehalten, so dass eine begrenzte Bewegung des Trägers 74 relativ zum Haltering 48 in axialer Richtung möglich ist, um einerseits die Schubsicherungselemente 72 durch die Keilfläche 76 des Keilrings 78 zu beaufschlagen oder nicht zu beaufschlagen, wenn das Spitzende 18 eingeschoben oder herausgezogen werden soll.

Bei dem zweiten Ausführungsbeispiel werden das Dichtungssystem 60 und das Schubsicherungssystem 70 in die Steckmuffe 14 eingesetzt und der Haltering 48 wird leicht eingedreht, um das Dichtungssystem 60 und das Schubsicherungssystem 70 in der Steckmuffe 14 zu halten.

Ferner wird ein Spreizsicherungselement 170 durch einen Durchbruch 172 in den einsteckseitigen Endabschnitt 44 in den Freiraum 142 gesteckt, um die Enden 144 und 146 gespreizt zu halten, so dass der Träger 74 seinen maximalen Durchmesser beibehält und auch die Haltenasen 132 mit der Ringnut 134 in Eingriff bleiben.

Somit wird das Schubsicherungssystem 70 erst nach Herausziehen des Spreizsicherungselements 170 aktiviert und erst dann können die Schubsicherungselemente 72 an der Außenfläche 96 wirksam werden.

## Patentansprüche

1. Rohrverbindung umfassend eine Steckmuffe (14) zur Aufnahme eines Spitzendes (18) eines eingesteckten Leitungselements (22), ein in der Steckmuffe (14) angeordnetes Dichtungssystem (60) mit einem Dichtungsring (62) zur Abdichtung des Spitzendes (18) in der Steckmuffe (14) und ein Schubsicherungssystem (70) zur Fixierung des Spitzendes (18) in der Steckmuffe (14),
wobei der Dichtungsring (62) des Dichtungssystems (60) ein Außendichtungselement (82) umfasst, welches an einer Innenwandfläche (88) der Steckmuffe (14) dichtend anlegbar ist, und ein Innendichtungselement (94) umfasst, welches unabhängig vom Außendichtungselement (82) aufweitbar ist, wobei das Innendichtungselement (94) als Innendichtlippe (98) ausgebildet ist, welche an einer Außenfläche (96) des Spitzendes (18) anlegbar und von dem Minimaldurchmesser (D1) auf den Maximaldurchmesser (D2) aufweitbar ist, wobei die Innendichtlippe (98) auf ihrer einer Abdichtseite (102) gegenüberliegenden Rückseite (104) Versteifungselemente (106) trägt, wobei die Versteifungselemente (106) in Umfangsrichtung der Innendichtlippe (98) voneinander getrennt an der Innendichtlippe (98) sitzen, und wobei mindestens einige der Versteifungselemente (106) des Innendichtungselements (94), eine Druckseite (112) aufweisen, mit welcher diese, in Benutzung, an eine Druckfläche (114) eines Druckelements (116) anlegbar sind.

2. Rohrverbindung nach Anspruch 1, **dadurch gekennzeichnet, dass** das Dichtungssystem (60) durch eine parallel zur Mittelachse (38) der Steckmuffe (14) wirkende Axialkraft (AK) beaufschlagbar ist, um die Innendichtlippe (98) des Innendichtungselements (94) kraftbeaufschlagt an der Außenfläche (96) des Spitzendes (18) anzulegen.

3. Rohrverbindung nach Anspruch 2, **dadurch gekennzeichnet, dass** die Axialkraft (AK) durch einen Axialdruckkörper (48) erzeugt ist, welcher über eine Stelleinrichtung (52, 54) relativ zur Steckmuffe (14) verstellbar positionierbar ist.

4. Rohrverbindung nach Anspruch 3, **dadurch gekennzeichnet, dass** die Stelleinrichtung ein Gewindeelement (52, 54) zur verstellbaren Positionierung des Axialdruckkörpers (48) relativ zur Steckmuffe (14) umfasst, und dass der Axialdruckkörper (48) durch ein in ein Innengewinde (52) der Steckmuffe (14) einschraubbares Außengewinde (54) verstellbar ist.

5. Rohrverbindung nach dem Oberbegriff des Anspruchs 1 oder nach einem der voranstehenden Ansprüche, **dadurch gekennzeichnet, dass** das Schubsicherungssystem (70) in der Steckmuffe (14) angeordnet ist.

6. Rohrverbindung nach Anspruch 5, **dadurch gekennzeichnet, dass** das Schubsicherungssystem (70) Schubsicherungselemente (72) umfasst, die radial zur Mittelachse (38) der Steckmuffe (14) in Richtung auf das Spitzende (18) bewegbar sind und kraftbeaufschlagt an dem Spitzende (18) anlegbar sind.

7. Rohrverbindung nach Anspruch 5 oder 6, **dadurch gekennzeichnet, dass** die Schubsicherungselemente (72) sowohl an das Spitzende (18) mit dem Maximaldurchmesser als auch an das Spitzende (18) mit dem Minimaldurchmesser anlegbar sind.

8. Rohrverbindung nach Anspruch 6 oder 7, **dadurch gekennzeichnet, dass** die Schubsicherungselemente (72) an einem Träger (74) angeordnet sind.

9. Rohrverbindung nach einem der Ansprüche 6 bis 8, **dadurch gekennzeichnet, dass** die Schubsicherungselemente (72) durch in einem spitzen Winkel zur Mittelachse (38) der Steckmuffe (14) verlaufende Keilflächen (76) in Richtung der Mittelachse (38) der Steckmuffe (14) beaufschlagbar sind.

10. Rohrverbindung nach Anspruch 9, **dadurch gekennzeichnet, dass** die Keilflächen (76) an einem Keilring (78) des Schubsicherungssystems (70) angeordnet sind.

11. Rohrverbindung nach Anspruch 9 oder 10, **dadurch gekennzeichnet, dass** die Schubsicherungselemente (72) und die Keilfläche (76) in Axialrichtung parallel zur Mittelachse (38) der Steckmuffe (14) relativ zueinander bewegbar und durch eine in dieser Richtung wirkende Axialkraft (AK) beaufschlagbar sind.

12. Rohrverbindung nach einem der Ansprüche 5 bis 11, **dadurch gekennzeichnet, dass** das Schubsicherungssystem (70) durch den Axialdruckkörper (48) beaufschlagt ist.

13. Rohrverbindung nach einem der voranstehenden Ansprüche, **dadurch gekennzeichnet, dass** das Dichtungssystem (60) einerseits und der Axialdruckkörper (48) andererseits auf das Schubsicherungssystem (70) einwirken.

14. Rohrverbindung nach einem der voranstehenden Ansprüche, **dadurch gekennzeichnet, dass** das Dichtungssystem (60) und das Schubsicherungssystem (70) und der Axialdruckkörper (48) aneinander anliegen.

15. Rohrverbindung nach einem der voranstehenden Ansprüche, **dadurch gekennzeichnet, dass** der Dichtungsring (62) und die Schubsicherungselemente (72) zur Montage der Rohrverbindung miteinander gekoppelt sind.

## Claims

1. Pipe coupling comprising a connecting sleeve (14) for accommodating a spigot end (18) of an inserted conduit element (22), a sealing system (60) arranged in the connecting sleeve (14) and having a sealing ring (62) for sealing the spigot end (18) in the connecting sleeve (14) and a restraining system (70) for fixing the spigot end (18) in the connecting sleeve (14),
wherein the sealing ring (62) of the sealing system (60) comprises an outer sealing element (82) adapted to abut sealingly against an inner wall surface (88) of the connecting sleeve (14) and an inner sealing element (94) expandable independently of the outer sealing element (82), wherein the inner sealing element (94) is designed as an inner sealing lip (98) adapted to abut against an outer surface (96) of the spigot end (18) and to expand from the minimum diameter (D1) to the maximum diameter (D2), wherein the inner sealing lip (98) has stiffening elements (106) on its rear side (104) located opposite a sealing side (102), wherein the stiffening elements (106) are seated on the inner sealing lip (98) separately from one another in circumferential direction of the inner sealing lip (98) and wherein at least some of the stiffening elements (106) of the inner sealing element (94) have a pressure side (112) for abutting, during use, on a pressure surface (114) of a pressure element (116).

2. Pipe coupling as defined in claim 1, **characterized in that** the sealing system (60) is acted upon by an axial force (AK) acting parallel to the central axis (38) of the connecting sleeve (14) in order to abut the inner sealing lip (98) of the inner sealing element (94) on the outer surface (96) of the spigot end (18) in a manner acted upon by a force.

3. Pipe coupling as defined in claim 2, **characterized in that** the axial force (AK) is generated by an axial pressure member (48) positionable relative to the connecting sleeve (14) so as to be adjustable via an adjusting device (52, 54).

4. Pipe coupling as defined in claim 3, **characterized in that** the adjusting device comprises a thread element (52, 54) for the adjustable positioning of the axial pressure member (48) relative to the connecting sleeve (14) and that the axial pressure member (48) is adjustable by way of an outer thread (54) screwable into an inner thread (52) of the connecting sleeve (14).

5. Pipe coupling as defined in the preamble to claim 1 or as defined in any one of the preceding claims, **characterized in that** the restraining system (70) is arranged in the connecting sleeve (14).

6. Pipe coupling as defined in claim 5, **characterized in that** the restraining system (70) comprises restraining elements (72) movable radially to the central axis (38) of the connecting sleeve (14) in the direction towards the spigot end (18) and abutting on the spigot end (18) in a manner acted upon by a force.

7. Pipe coupling as defined in claim 5 or 6, **characterized in that** the restraining elements (72) are adapted to abut both on the spigot end (18) with the maximum diameter and on the spigot end (18) with the minimum diameter.

8. Pipe coupling as defined in claim 6 or 7, **characterized in that** the restraining elements (72) are arranged on a carrier (74).

9. Pipe coupling as defined in any one of claims 6 to 8, **characterized in that** the restraining elements (72) are acted upon in the direction of the central axis (38) of the connecting sleeve (14) by wedge surfaces (76) extending at an acute angle to the central axis (38) of the connecting sleeve (14).

10. Pipe coupling as defined in claim 9, **characterized in that** the wedge surfaces (76) are arranged on a wedge ring (78) of the restraining system (70).

11. Pipe coupling as defined in claim 9 or 10, **characterized in that** the restraining elements (72) and the wedge surface (76) are movable relative to one another in an axial direction parallel to the central axis (38) of the connecting sleeve (14) and acted upon by an axial force (AK) acting in this direction.

12. Pipe coupling as defined in any one of claims 5 to 11, **characterized in that** the restraining system (70) is acted upon by the axial pressure member (48).

13. Pipe coupling as defined in any one of the preceding claims, **characterized in that** the sealing system (60), on the one hand, and the axial pressure member (48), on the other hand, act on the restraining system (70).

14. Pipe coupling as defined in any one of the preceding claims, **characterized in that** the sealing system (60) and the restraining system (70) and the axial pressure member (48) abut on one another.

15. Pipe coupling as defined in any one of the preceding claims, **characterized in that** the sealing ring (62) and the restraining elements (72) are coupled to one another for the assembly of the pipe coupling.

## Revendications

1. Raccord de tuyau comprenant un manchon emboîtable (14) pour recevoir une extrémité effilée (18) d'un élément de conduite (22) emboîté, un système d'étanchéité (60) disposé dans le manchon emboîtable (14) et comprenant une bague d'étanchéité (62) pour rendre étanche l'extrémité effilée (18) dans le manchon emboîtable (14) et un système anti-cisaillement (70) pour fixer l'extrémité effilée (18) dans le manchon emboîtable (14), la bague d'étanchéité (62) du système d'étanchéité (60) comportant un élément d'étanchéité extérieur (82) qui peut être placé de manière étanche contre une surface de paroi intérieure (88) du manchon emboîtable (14) et un élément d'étanchéité intérieur (94) qui peut être élargi indépendamment de l'élément d'étanchéité extérieur (82), l'élément d'étanchéité intérieur (94) étant en forme de lèvre d'étanchéité intérieure (98) pouvant être placée contre une face extérieure (96) de l'extrémité effilée (18) et dont le diamètre minimal (D1) peut être élargi au diamètre maximal (D2), la lèvre d'étanchéité intérieure (98) portant des éléments de rigidification (106) sur son côté arrière (104) opposé à un côté d'étanchéité (106), les éléments de rigidification (106) étant séparés les uns des autres sur la lèvre d'étanchéité intérieure (98) dans le sens périphérique de la lèvre d'étanchéité intérieure (98), et au moins quelques-uns des éléments de rigidification (106) de l'élément d'étanchéité intérieur (94) présentant un côté pression (112) grâce auquel ceux-ci peuvent plaquer contre une face de pression (114) d'un élément de pression (116) lors de l'utilisation.

2. Raccord de tuyau selon la revendication 1, **caractérisé en ce que** le système d'étanchéité (60) peut être soumis à une force axiale (AK) agissant parallèlement à l'axe médian (38) du manchon emboîtable (14) afin de plaquer la lèvre d'étanchéité intérieure (98) de l'élément d'étanchéité intérieur (94) contre la face extérieure (96) de l'extrémité effilée (18) sous l'action d'une force.

3. Raccord de tuyau selon la revendication 2, **caractérisé en ce que** la force axiale (AK) est générée par un corps sous pression axiale (48) lequel peut être positionné de manière à se déplacer par rapport au manchon emboîté (14) au moyen d'un dispositif de réglage (52, 54).

4. Raccord de tuyau selon la revendication 3, **caractérisé en ce que** le dispositif de réglage comprend un élément fileté (52, 54) destiné au positionnement mobile du corps sous pression axiale (48) par rapport au manchon emboîté (14) et **en ce que** le corps sous pression axiale (48) peut être déplacé grâce à un filetage extérieur (54) pouvant être vissé dans un filetage intérieur (52) du manchon emboîté (14).

5. Raccord de tuyau selon le préambule de la revendication 1 ou selon l'une quelconque des revendications précédentes, **caractérisé en ce que** le système anti-cisaillement (70) est disposé dans le manchon emboîté (14).

6. Raccord de tuyau selon la revendication 5, **caractérisé en ce que** le système anti-cisaillement (70) comprend des éléments anti-cisaillement (72) pouvant être déplacés radialement à l'axe médian (38) du manchon emboîté (14) en direction de l'extrémité effilée (18) et plaquer contre l'extrémité effilée (18) sous l'action de la force.

7. Raccord de tuyau selon la revendication 5 ou la revendication 6, **caractérisé en ce que** les éléments anti-cisaillement (72) peuvent plaquer aussi bien contre l'extrémité effilée (18) avec le diamètre maximal que contre l'extrémité effilée (18) avec le diamètre minimal.

8. Raccord de tuyau selon la revendication 6 ou la revendication 7, **caractérisé en ce que** les éléments anti-cisaillement (72) sont disposés sur un support (74).

9. Raccord de tuyau selon l'une quelconque des revendications 6 à 8, **caractérisé en ce que** les éléments anti-cisaillement (72) sont sollicités par des surfaces en coin (76) formant un angle aigu avec l'axe médian (38) du manchon emboîté (14) en direction de l'axe médian (38) du manchon (14).

10. Raccord de tuyau selon la revendication 9, **caractérisé en ce que** les surfaces en coin (76) sont disposées contre une bague de calage (78) du système anti-cisaillement (70).

11. Raccord de tuyau selon la revendication 9 ou la revendication 10, **caractérisé en ce que** les éléments anti-cisaillement (72) et la surface en coin (76) sont mobiles les uns par rapport aux autres dans le sens axial parallèlement à l'axe médian (38) du manchon emboîté (14) et peuvent être soumis à une force axiale (AK) agissant dans ce sens.

12. Raccord de tuyau selon l'une quelconque des revendications 5 à 11, **caractérisé en ce que** le système anti-cisaillement (70) peut être sollicité par le corps sous pression axiale (48).

13. Raccord de tuyau selon l'une quelconque des revendications précédentes, **caractérisé en ce que** le système d'étanchéité (60) d'une part et le corps sous pression axiale (48) d'autre part agissent sur le système anti-cisaillement (70).

14. Raccord de tuyau selon l'une quelconque des revendications précédentes, **caractérisé en ce que** le système d'étanchéité (60) et le système anti-cisaillement (70) ainsi que le corps sous pression axiale (48) plaquent l'un contre l'autre.

15. Raccord de tuyau selon l'une quelconque des revendications précédentes, **caractérisé en ce que** la bague d'étanchéité (62) et les éléments anti-cisaillement (72) sont couplés ensemble pour le montage du raccord de tuyau.
